# EUROPÄISCHE PATENTANMELDUNG

(11) **EP 4 613 602 A1**
(43) Veröffentlichungstag der Anmeldung: **10.09.2025**
(21) Anmeldenummer: 25155830.0
(22) Anmeldetag: 04.02.2025
(51) Int. Cl.: B61D 23/02

(54) **ZUSTIEGSYSTEM MIT ADAPTERRAHMEN**

(30) Priorität: 04.03.2024 DE 202024101038 U
(71) Anmelder: Bode - Die Tür GmbH, 34123 Kassel (DE)
(72) Erfinder: Theis, Christoph, 34537 Bad Wildungen (DE); Cimmino, Marco, 37139 Adelebsen (DE); Arend, Ulrich, 34576 Dickershausen (DE); Winterfeld, Dirk, 34128 Kassel (DE)
(74) Vertreter: Patentanwälte Bauer Vorberg Kayser

(57) **Zusammenfassung**

Die vorliegende Erfindung betrifft ein Zustiegsystem für Fahrzeuge insbesondere für Fahrzeuge (1) des öffentlichen Personenverkehrs, umfassend eine Trittkassette (6) mit einem Kassettenrahmen (10) und einem relativ zum Kassettenrahmen (10) bewegbaren Trittplattenmodul (7). Die Erfindung ist dadurch gekennzeichnet, dass
• das Zustiegsystem (2) einen Adapterrahmen (9) umfasst, in welchen der Kassettenrahmen (10) einsetzbar ist, wobei
• der Kassettenrahmen (10) eine fahrzeugunabhängige Größe aufweist, und wobei
• der Adapterrahmen (9) eine fahrzeugabhängige Größe zur Anpassung des Zustiegsystems (2) an eine fahrzeugseitige Aufnahme aufweist, so dass der Adapterrahmen (9) in der fahrzeugseitigen Aufnahme einsetzbar ist.

## Beschreibung

Die vorliegende Erfindung betrifft ein Zustiegsystem für Fahrzeuge, insbesondere für Fahrzeuge des öffentlichen Personenverkehrs, umfassend eine Trittkassette mit einem Kassettenrahmen und einem relativ zum Kassettenrahmen bewegbaren Trittplattenmodul.

Zustiegsysteme werden verwendet, um Personen das Ein- und Aussteigen in ein Fahrzeug zu erleichtern. Unter einem "Zustieg" kann also sowohl das Ein- als auch das Aussteigen in das Fahrzeug zu verstehen sein. Im Sinne der Erfindung kann ein Fahrzeug des öffentlichen Personenverkehrs beispielsweise ein Schienenfahrzeug, insbesondere ein Zug, eine Straßenbahn, eine Tram, oder eine U-Bahn etc. sein. Auch kann ein solches Fahrzeug ein radgebundenes Fahrzeug wie beispielsweise ein Bus sein. Zustiegsysteme erleichtern den Einstieg häufig dadurch, dass sie einen Spalt zwischen einem Haltesteig (Haltestelle, Bürgersteig, Straße) und dem Fahrzeug verkleinern und/oder einen Höhenunterschied zwischen Fahrzeug und Haltesteig ausgleichen. Zustiegsysteme können beispielsweise in Form von Schiebetrittsystemen oder Klapptrittsystemen ausgebildet sein. Auch kombinierte Systeme sind bekannt. Vorliegend sei insbesondere auf Schiebetrittsysteme abgestellt.

Je nach Fahrzeugtyp, Fahrzeuggröße oder auch je nach Kundenwunsch kann der für ein Zustiegsystem zur Verfügung stehende Bauraum variieren. Entsprechend besteht ein erhöhter Bedarf an einer einfachen und flexiblen Anpassung von Zustiegsystemen bzw. den zugehörigen Trittkassetten an den in einem Fahrzeug zur Verfügung stehenden Bauraum. Bislang wird die Fußbodenintegration durch einen Kassettenrahmen aus Aluminiumprofilen realisiert, der in seiner Größe auf das jeweilige Fahrzeug angepasst ist. In den Aluminiumprofilen sind in der Regel sowohl Konturen zur Führung des Ausschubmoduls bzw. des Trittplattenmoduls als auch für die Integration der Trittkassette in den Fußboden des Fahrzeugs, sowie für die Aufnahme eines Wartungsdeckels integriert. Somit ist zur Anpassung der Trittkassette an die verschiedenen Fahrzeuge in der Regel eine Neu- bzw. Umkonstruktion der Trittkassette inklusive dessen Kassettenrahmen erforderlich, was mit einem erheblichen planerischen Aufwand und hohen Kosten verbunden ist.

Der vorliegenden Erfindung liegt daher die Aufgabe zugrunde ein Zustiegsystem bereitzustellen, welches einfach und kostengünstig auf die baulichen Gegebenheiten des Fahrzeugs anpassbar ist, in welchem das Zustiegsystem zum Einsatz kommen soll. Ferner soll das Zustiegsystem flexibel an Kundenwünsche anpassbar sein. Die gleiche Aufgabe liegt dem erfindungsgemäß vorgeschlagenen Fahrzeug zugrunde.

Die genannte Aufgabe wird mit einem Zustiegsystem sowie einem Fahrzeug gemäß der unabhängigen Ansprüche gelöst.

Das erfindungsgemäße Zustiegsystem für Fahrzeuge ist insbesondere für Fahrzeuge des öffentlichen Personenverkehrs geeignet. Das Zustiegsystem umfasst eine Trittkassette, wobei die Trittkassette einen Kassettenrahmen, und ein Trittplattenmodul umfasst. Das erfindungsgemäße Zustiegsystem umfasst neben der Trittkassette auch einen Adapterrahmen, in welchen der Kassettenrahmen einsetzbar ist. Der Kassettenrahmen und/oder der Adapterrahmen können Befestigungsmittel zur Verbindung, insbesondere lösbaren Verbindung, des Kassettenrahmens mit dem Adapterrahmen aufweisen. Der Kassettenrahmen der Trittkassette weist eine fahrzeugunabhängige Größe auf, wohingegen der Adapterrahmen eine fahrzeugabhängige Größe aufweist. Der Adapterrahmen ist in eine fahrzeugseitigen Aufnahme einsetzbar. Er kann Befestigungsmittel zur Verbindung, insbesondere zur lösbaren Verbindung, des Adapterrahmens mit der fahrzeugseitigen Aufnahme aufweisen. Die fahrzeugseitigen Aufnahmen unterschiedlicher Fahrzeuge weisen eine fahrzeugabhängige Größe auf. Daher ist der Adapterrahmen zur größenabhängigen Anpassung des Zustiegsystems an die fahrzeugseitige Aufnahme in Bezug auf seine Größe fahrzeugabhängig ausgebildet.

Das Zustiegsystem wird im Wesentlichen aus der Trittkassette und dem Adapterrahmen gebildet. Die Trittkassette kann durch die fahrzeugunabhängige Größe des Kassettenrahmens in verschiedenen Fahrzeugen zum Einsatz kommen, da der Adapterahmen eine fahrzeugabhängige Größe aufweist und so die Trittkassette auf die verschieden großen fahrzeugseitigen Aufnahmen der verschiedenen Fahrzeuge größentechnisch adaptiert.

Mit der fahrzeugabhängigen bzw. fahrzeugunabhängigen Größe der Rahmen (Adapterrahmen, Kassettenrahmen) wird im Sinne der Anmeldung im Wesentlichen auf die äußeren Abmessungen und die äußere Form der Rahmen abgezielt. Beispielsweise werden eine Breite, eine Höhe, und/oder eine Länge des Adapterrahmens auf die Abmessungen der fahrzeugseitigen Aufnahme angepasst. Es kann ebenso ein auf die fahrzeugseitige Aufnahme angepasstes Profil für die Herstellung des Adapterrahmens verwendet werden, wie zum Beispiel ein breiteres und/oder höheres Profil oder ein Profil mit anderem Querschnitt und/oder anderer Form. Alle diese Anpassungen sind im Sinne der Anmeldung mit der Formulierung gemeint, dass der Adapterrahmen in Bezug auf seine Größe fahrzeugabhängig ausgebildet ist.

Das Zustiegsystem ist insbesondere modular ausgebildet. Das bedeutet, dass die Trittkassette mit einer Vielzahl verschieden großen Adapterrahmen zu einem Zustiegsystem aus einer Trittkassette und einem Adapterrahmen kombiniert werden kann. Der Adapterrahmen ist dabei an die Größe der fahrzeugseitigen Aufnahme angepasst, während der Kassettenrahmen und insbesondere die gesamte Trittkassette fahrzeugunabhängig immer gleich groß ausgebildet ist. Auf diese Weise kann für jeden Anwendungsfall bzw. für jedes Fahrzeug die gleiche Trittkassette genutzt werden und mit einem an die fahrzeugseitige Aufnahme angepassten Adapterrahmen kombiniert werden. So muss nur der Adapterrahmen fahrzeugspezifisch in seiner Größe angepasst sein, so dass eine kostenintensive und aufwendige Umkonstruktion der Trittkassette bzw. des Kassettenrahmens entfallen kann.

Die fahrzeugunabhängige Größe des Kassettenrahmens bewirkt also, dass eine bestimmte Größe des Kassettenrahmens für mehrere verschiedene Fahrzeuge mit unterschiedlich großen fahrzeugseitigen Aufnahmen verwendet werden kann. Der Kassettenrahmen und damit insbesondere auch die gesamte Trittkassette hat also eine Art Standardgröße, die in vielen verschiedenen Fahrzeugen zum Einsatz kommen kann.

Der Kassettenrahmen hingegen ist nicht an die fahrzeugseitige Aufnahme angepasst. Seine Größe, also im Wesentlichen seine äußeren Abmessungen sowie die äußere Form, sind für verschiedene Fahrzeuge mit verschieden großen fahrzeugseitigen Aufnahmen gleich.

Nach einer Ausgestaltung der Erfindung kann vorgesehen sein, dass der Kassettenrahmen und/oder der Adapterrahmen Laschen zur Verbindung des Kassettenrahmens mit dem Adapterrahmen aufweist/aufweisen. Die Laschen dienen vorzugsweise zur Aufnahme von Schraubverbindungen, so dass der Kassettenrahmen mit dem Adapterrahmen verschraubt werden kann. Dazu können die Laschen jeweils Bohrungen, und/oder Langlöcher, und/oder Gewinde aufweisen, die zusammen mit Schrauben und ggf. Muttern die Schraubverbindungen ausbilden. Korrespondierende Bohrungen, Langlöcher und/oder Gewinde können im jeweils anderen Bauteil (Kassettenrahmen und/oder Adapterrahmen) zur Ausbildung der Schraubverbindung vorgesehen sein.

Die Laschen oder wenigstens ein Teil der Laschen können auch zur Befestigung weiterer Bauteile an dem Kassettenrahmen und/oder dem Adapterrahmen verwendet werden.

Die Laschen oder wenigstens ein Teil der Laschen können auch zur zusätzlichen Befestigung der Trittkassette am Fahrzeug und insbesondere an der fahrzeugseitigen Aufnahme dienen.

Insbesondere sind die Laschen einstückig mit dem Kassettenrahmen ausgebildet. Einstückig heißt, dass die Laschen nicht nachträglich als zusätzliches Bauteil an den Kassettenrahmen angebracht sind. Die Laschen können beispielsweise durch Umformung bestimmter Bereiche des Kassettenrahmens hergestellt werden, beispielsweise durch auslasern und anschließendes herausbiegen der Lasche aus dem Kassettenrahmen. Sofern der Kassettenrahmen als Gussteil ausgebildet ist, können die Laschen direkt im Gießprozess mit ausgebildet werden.

Die Laschen stehen vom Kassettenrahmen ab, so dass eine einfache Befestigung des Kassettenrahmens am Adapterahmen über die Laschen erreicht werden kann. Vorzugsweise stehen die Laschen dabei mit einem Winkel von 80 bis 100 °, insbesondere 90 °, von einer Oberfläche des Kassettenrahmens ab. Insbesondere stehen die Laschen über den Kassettenrahmen bzw. dessen Profile hinaus, so dass die Laschen mit dem Adapterrahmen überlappen können.

Die Laschen werden vorzugsweise bei der Herstellung des Kassettenrahmens in den Kassettenrahmen eingestanzt oder gelasert, und danach herausgebogen, herausgekantet, und/oder aufgestellt.

Der Kassettenrahmen ist vorzugsweise als ein Laser-Kant-Bauteil ausgeführt. Er ist also im Gegensatz zu beispielsweise bestimmten Aluminiumprofilen nicht extrudiert oder stranggegossen, so dass keine großen Werkzeuge zur Herstellung des Kassettenrahmens notwendig sind. Bei der Herstellung von Laser-Kant-Bauteilen werden zunächst die Profile und die Laschen für den Kassettenrahmen in ihrer aufgeklappten bzw. abgewickelten Form aus einer flachen Metalltafel ausgelasert und anschließend durch einen oder mehrere Umformprozesse zu einem dreidimensionalen Profil, wie beispielsweise einem C-Profil, umgeformt, sowie die Laschen aufgestellt bzw. herausgebogen.

Die Länge der Laschen entspricht insbesondere maximal einer Höhe des Kassettenrahmens. Die äußere Form des Kassettenrahmens ist in der Regel rechteckig und entspricht einem flachen Quader, wobei die Höhe des Quaders sehr viel kleiner ist als seine Breite und seine Länge.

Es ist je nach Anwendungsfall ebenfalls denkbar, dass die Laschen an den Kassettenrahmen angeschweißt oder angeschraubt werden. Die Laschen können beispielsweise in Form von L-Winkeln oder als Flacheisen ausgebildet sein, welche an dem Kassettenrahmen mithilfe von Schraubverbindungen oder Schweißverbindungen befestigt werden können.

Der Kassettenrahmen kann als ein im Wesentlichen rechteckiger Rahmen mit vier Schenkeln ausgebildet sein. Die Schenkel können aus Rechteck-Rohren, C-Profilen, U-Profilen und/oder anderen Profil-Formen hergestellt sein. Insbesondere handelt es sich dabei um Metall-Rohre bzw. Metall-Profile. C-Profile sind dabei besonders bevorzugt.

Der Kassettenrahmen muss nicht an allen vier Seiten vollständig geschlossen sein. Es ist auch denkbar, dass der Kassettenrahmen in einem Schenkel eine Öffnung beispielsweise zum Durchführen des Trittplattenmoduls aufweist, oder auch nur drei Schenkel umfasst, so dass an der Seite des rechteckigen Kassettenrahmens, an der sich kein Schenkel bzw. Profil befindet, das Trittplattenmodul ausgefahren werden kann. Der Kassettenrahmen kann dazu beispielsweise insgesamt eine U-Form oder C-Form mithilfe dreier Schenkel ausbilden. Die offene Seite, also dort wo kein Rohr oder Profil vorgesehen ist, kann durch eine Strebe versteift sein, wobei die Strebe derart angeordnet und/oder eingerichtet ist, dass sie das Ausfahren des Trittplattenmoduls ermöglicht. Eine solche Strebe kann beispielsweise als ein Flacheisen, ein Rundstab, eine Zugstrebe oder dergleichen ausgebildet sein. Um das Ausfahren des Trittplattenmoduls zu ermöglichen, kann das Querschnittsprofil der Strebe kleiner sein als das Querschnittsprofil der übrigen Rohre oder der Profile des Kassettenrahmens. Es ist aber auch denkbar, dass die Strebe oder das vierte Rohr bzw. das vierte Profil in einer anderen Ebene angeordnet ist, als die anderen drei Rohre bzw. Profile des Kassettenrahmens, um auf diese Weise das Ausfahren des Trittplattenmoduls in der Ebene der drei Rohre bzw. Profile des Kassettenrahmens zu ermöglichen.

Die Trittkassette kann insbesondere ein Kassettengehäuse umfassen, welches am Kassettenrahmen befestigt ist. Das Kassettengehäuse kann aus Metall, Kunststoff, Verbundmaterialien und/oder anderen geeigneten Materialien gefertigt sein. Das Kassettengehäuse kann derart eingerichtet sein, dass es die Trittkassette im Wesentlichen zur Umgebung hin abgrenzt, das heißt vor Umwelteinflüssen wie Verunreinigungen, Feuchtigkeit, Sonneneinstrahlung und dergleichen schützt. Daher ist das Kassettengehäuse insbesondere im Wesentlichen geschlossen ausgebildet. Dabei können dennoch diverse funktionale Öffnungen im Kassettengehäuse vorgesehen sein, durch die beispielsweise die Trittkassette befestigt oder gewartet werden kann, oder durch die das Trittplattenmodul ausgefahren werden kann.

Da das Trittplattenmodul Teil der Trittkassette ist, weist der Adapterrahmen insbesondere keinerlei Führungsprofile oder Führungsschienen zum Ausfahren des Trittplattenmoduls auf. Diese Aufgabe obliegt der Trittkassette bzw. dessen Modulen und insbesondere dem Kassettenrahmen. Auf diese Weise kann der Adapterrahmen sehr einfach gestaltet werden.

Eine derart ausgebildete Trittkassette kann auch eine deutlich vereinfachte Montage ermöglichen, da die elektrische Kontaktierung des Antriebsmoduls über standardisierte Steckerelemente erfolgen kann, und das Befestigen der Trittkassette in dem Adapterrahmen ebenfalls über standardisierte Befestigungsmittel geschehen kann. Eine Anpassung der Befestigungselemente der Trittkassette bzw. des Kassettenrahmens an die fahrzeugseitige Aufnahme, wie es bislang üblich war, kann somit entfallen. Gleiches gilt für die Wartung der Trittkassette, die aufgrund der einfachen Montage/Demontage ebenfalls deutlich vereinfacht sein kann.

Wie bereits erwähnt weisen unterschiedliche Fahrzeuge verschieden große fahrzeugseitige Aufnahmen für das Zustiegsystem auf. Die fahrzeugseitigen Aufnahmen können beispielsweise Herstellerbedingt, Modellbedingt, Bauartbedingt, oder je nach Kundenwunsch voneinander in ihrer Größe abweichen. Das heißt die fahrzeugseitigen Aufnahmen können unterschiedlich breit, tief und/oder hoch sein, sowie unterschiedliche Formen aufweisen.

Die erfindungsgemäße Trittkassette bzw. der erfindungsgemäße Kassettenrahmen der vorliegenden Anmeldung eignet sich ohne Adapterrahmen nicht für die Fußbodenintegration. Es würde eine Fuge oder eine Lücke um die Trittkassette herum im Fußboden des Fahrzeugs entstehen, da eine Fußbodenintegration beispielsweise mittels Anformungen an dem Kassettenrahmen nicht vorgesehen ist. Auf diese Weise kann die äußere Form des Kassettenrahmens sehr einfach gehalten werden. Die Fußbodenintegration ist, wie nachfolgend beschrieben, die Aufgabe des Adapterrahmens.

Der Adapterrahmen ist an die Form des Kassettenrahmens angepasst, so dass der Kassettenrahmen und damit die gesamte Trittkassette in dem Adapterrahmen angeordnet werden kann. Dazu kann eine Kassettenaufnahme am Adapterrahmen vorgesehen sein. Bei der Kassettenaufnahme kann es sich um eine Aussparung im Adapterrahmen handeln, in welcher die Trittkassette vollständig aufnehmbar ist.

Der Adapterrahmen wird zusammen mit der Trittkassette in einem bestimmungsgemäßen Einbauzustand unterhalb eines Fußbodens des Fahrzeugs im Fahrzeug angeordnet. Mit dem Fußboden des Fahrzeugs ist der durch die im Fahrzeug befindlichen Personen betretene Fußboden im Fahrzeuginneren gemeint. Insbesondere ein Deckel des Zustiegsystems kann dabei einen Teil des Fußbodens des Fahrzeugs ausbilden und mit diesem im bestimmungsgemäßen Einbauzustand des Zustiegsystems fluchtend angeordnet sein. Der Deckel verschließt dann im Wesentlichen die fahrzeugseitige Aufnahme nach oben hin.

Der bestimmungsgemäße Einbauzustand ist der Zustand, in welchem das Zustiegsystem funktionstüchtig in dem Fahrzeug eingebaut ist. Das bedeutet, dass alle Baugruppen/Module des Zustiegsystems korrekt im Fahrzeug verbaut sind und das Zustiegsystem funktionsbereit ist.

Der Adapterrahmen kann Befestigungsmittel aufweisen, mithilfe derer der Adapterrahmen mit dem Fahrzeug über die fahrzeugseitige Aufnahme verbunden werden kann. Die Befestigungsmittel können beispielsweise Schraubverbindungen, Formschlussverbindungen, Schnapphakenverbindungen und dergleichen umfassen. Dazu können auch entsprechende Teile der Befestigungsmittel wie beispielsweise Anformungen, Öffnungen, Gewinde oder Stehbolzen an der fahrzeugseitigen Aufnahme am Fahrzeug vorgesehen sein. Schraubverbindungen können bevorzugt sein, da sie kostengünstig sind und eine einfache Montage/Demontage bei gleichzeitig hoher Festigkeit bieten. Sowohl an dem Adapterrahmen als auch an der fahrzeugseitigen Aufnahme können Öffnungen vorgesehen sein, durch die die Schrauben der Schraubverbindung gesteckt werden können und in Verbindung mit geeigneten Muttern oder Gewinden die Schraubverbindung ausbilden können. Auch andere Befestigungsmittel sind denkbar, beispielsweise Nietverbindungen oder Klebeverbindungen.

Der Kassettenrahmen und/oder der Adapterrahmen können Befestigungsmittel zur insbesondere lösbaren Verbindung des Kassettenrahmens mit dem Adapterrahmen umfassen. Damit der Kassettenrahmen an dem Adapterrahmen befestigt werden kann, können entsprechende Befestigungsmittel vorgesehen sein. Die Befestigungsmittel können Anformungen an dem Kassettenrahmen und/oder dem Adapterrahmen umfassen, sowie Schraubverbindungen, Formschlussverbindungen, Schnapphakenverbindungen und dergleichen. Es können die gleichen Befestigungsmittel genutzt werden, die auch bereits für die Verbindung von Adapterrahmen und fahrzeugseitiger Aufnahme vorgeschlagen wurden.

Das Trittplattenmodul ist relativ zum Kassettenrahmen bewegbar eingerichtet. Das Trittplattenmodul kann manuell (per Hand/Muskelkraft) oder automatisiert bewegt werden. Damit das Trittplattenmodul bewegt werden kann, kann die Trittkassette ein Ausschubmodul zur beweglichen Lagerung des Trittplattenmoduls an dem Kassettenrahmen umfassen. Zur automatisierten Bewegung kann die Trittkassette ein Antriebsmodul umfassen.

Bei dem Ausschubmodul kann es sich beispielsweise um einen Ausschubrahmen, Ausschubschienen, oder Linearführungen handeln, die einerseits mit dem Kassettenrahmen und andererseits mit dem Trittplattenmodul verbunden sind. Das Trittplattenmodul kann ein- oder mehrteilig ausgebildet sein und dient als ausfahrbarer Tritt für die ein- und austeigenden Fahrgäste. Das Trittplattenmodul ist daher dahingehend ausgebildet, dass es das Gewicht von zusteigenden Personen aufnehmen kann. Über das Antriebsmodul ist das Trittplattenmodul, z.B. eine Trittplatte, von einer eingefahrenen Stellung in Richtung einer ausgefahrenen Stellung ausfahrbar und umgekehrt.

Nach einer weiteren Ausgestaltung der Erfindung kann vorgesehen sein, dass der Kassettenrahmen aus Edelstahl, vorzugsweise aus Edelstahlprofilen, hergestellt ist. Ein Kassettenrahmen aus Edelstahl hat den Vorteil, dass er weniger anfällig für Korrosion ist und dabei zudem sehr viel einfacher zu reinigen ist. Dies ist von Vorteil, da der Kassettenrahmen im Betrieb mit Salzwasser und Verunreinigungen in Kontakt kommen kann.

Nach einer weiteren Ausgestaltung der Erfindung kann vorgesehen sein, dass der Adapterrahmen aus Aluminium, insbesondere aus Aluminiumprofilen, hergestellt ist. Für den Adapterrahmen bieten sich insbesondere extrudierte oder stranggegossene Aluminiumprofile an. Es kann ebenso vorgesehen sein, dass nur ein Teil des Adapterrahmens aus Aluminiumprofilen hergestellt ist.

Nach einer weiteren Ausgestaltung der Erfindung kann vorgesehen sein, dass der Adapterrahmen derart eingerichtet ist, dass er vollständig in einen Fußboden des Fahrzeugs integrierbar ist. Im Sinne der Anmeldung bedeutet vollständig in den Fußboden integrierbar, dass eine Oberseite des Adapterrahmens fluchtend mit dem Fußboden des Fahrzeugs angeordnet ist. Anders ausgedrückt ist der Adapterrahmen so zum Fußboden ausgerichtet und in der fahrzeugseitigen Aufnahme angeordnet, dass er sich im Wesentlichen in die Oberfläche des Fußbodens integriert und dabei keine Stolperkanten durch den Adapterrahmen im Fußboden bzw. in der Oberfläche des Fußbodens entstehen.

Nach einer weiteren Ausgestaltung der Erfindung kann vorgesehen sein, dass das Zustiegsystem einen Deckel zur Abdeckung einer Oberseite der Trittkassette umfasst, wobei der Deckel dazu in einer Deckelaufnahme in dem Adapterrahmen einsetzbar ist. Der Deckel dient der Ermöglichung der Wartung des Zustiegsystems und insbesondere der Ermöglichung der Wartung der Trittkassette bzw. deren Komponenten. Der Deckel kann daher auch als Wartungsdeckel bezeichnet werden. Der Deckel kann insbesondere mithilfe von Scharnieren an dem Adapterrahmen befestigt sein, so dass der Deckel aufklappbar ausgebildet ist. Der Deckel kann aber auch vollständig abnehmbar ausgebildet sein.

Der Deckel schließt das Zustiegsystem nach oben hin ab und dient als Trittfläche im Fußboden des Fahrzeugs. Daher ist der Deckel insbesondere in einem bestimmungsgemäßen Einbauzustand des Zustiegsystems im Fahrzeug mit einem Fußboden des Fahrzeugs fluchtend angeordnet, so dass der Deckel wenigstens einen Teil des Fußbodens des Fahrzeugs ausbildet. Der Deckel ist dabei, wie oben für den Adapterrahmen bereits beschrieben, vollständig in den Fußboden des Fahrzeugs integrierbar. Der Deckel verschließt insbesondere eine Öffnung im Fußboden des Fahrzeugs durch welche das Zustiegsystem in den Fußboden eingelassen werden kann.

Insbesondere weist der Deckel eine Antirutsch-Oberfläche auf. Der Deckel kann auch eine zu der Oberfläche des Fußbodens des Fahrzeugs gleiche Oberfläche aufweisen. Dabei kann die Oberflächenstruktur und/oder ein Oberflächenmaterial des Deckels gleich zu einer Oberflächenstruktur und/oder zu einem Oberflächenmaterial des Fußbodens ausgebildet sein.

Nach einer weiteren Ausgestaltung der Erfindung kann vorgesehen sein, dass das Antriebsmodul, und/oder das Ausschubmodul, und/oder das Trittplattenmodul eine fahrzeugunabhängige Größe aufweisen. Die Module weisen dabei eine für jedes Fahrzeug gleiche Größe auf. Somit wird eine aufwendige und kostenintensive Grö-ßenanpassung der Module vermieden.

Insbesondere weist die gesamte Trittkassette eine fahrzeugunabhängige Größe auf. Die Merkmale stellen darauf ab, dass die Trittkassette und ihre Bauteile bzw. Baugruppen/Module Standardgrößen aufweisen, welche nicht spezifisch/individuell auf ein Fahrzeug angepasst sind. Durch die Verwendung von Trittkassetten in Standardgröße können Kosten und Lagerraum eingespart sowie Flexibilität gewonnen werden.

Nach einer weiteren Ausgestaltung der Erfindung kann ein an dem Adapterrahmen angeordnetes elektrisches Steckelement vorgesehen sein, welches dazu eingerichtet ist, mit einem dazu korrespondierenden fahrzeugseitigen elektrischen Steckelement zusammenzuwirken und die Trittkassette bzw. das Antriebsmodul mit elektrischer Energie zu versorgen und/oder einen Datenaustausch zu ermöglichen. Unter zueinander korrespondierenden "Steckelementen" ist an dieser Stelle die Bereitstellung einer Steckverbindung im Sinne eines Stecker-Buchse Prinzips zu verstehen. Das fahrzeugseitige Steckelement ist mit einer fahrzeugseitigen elektrischen Energiequelle und/oder mit einer Datenverarbeitungseinheit verbunden. Das adapterrahmenseitige Steckelement ist mit dem Antriebsmodul elektrisch und/oder signaltechnisch verbunden. Die Verbindung zwischen dem adapterrahmenseitigen Steckelement und dem Antriebsmodul kann durch eine weitere Steckverbindung, ein Kabel oder anderweitige elektrische Verbindungsmittel bzw. Signalverbindungsmittel gewährleistet sein.

Es sei betont, dass die der Erfindung zugrunde liegende Aufgabe auch mit einem Fahrzeug, insbesondere einem Fahrzeug des öffentlichen Personenverkehrs, gelöst wird, welches ein erfindungsgemäßes Zustiegsystem aufweist.

Von der Erfindung kann auch ein modularer Baukasten für Zustiegsysteme umfasst sein. In einem solchen modularen Baukasten ist der Kassettenrahmen bzw. die gesamte Trittkassette in einer begrenzten Anzahl an unterschiedlichen Größen vorgesehen. Beispielsweise können Kassettenrahmen in drei unterschiedlichen Grö-βen vorgesehen sein: Klein, Mittel, und Groß. Die daraus resultierende begrenzte Anzahl an verschieden großen Trittkassetten kann mit einer Vielzahl an Adapterrahmen kombiniert werden, so dass sich ein modularer Baukasten für das Zustiegsystem ergibt, bei dem aus den drei verschieden großen Trittkassetten und der Vielzahl an Adapterrahmen ausgewählt werden kann, so dass das Zustiegsystem in einer großen Vielzahl an verschiedenen Fahrzeugen eingesetzt werden kann. Insbesondere sind je Trittkassette wenigstens 5 oder wenigstens 10 verschieden große Adapterrahmen vorgesehen, welche jeweils auf eine bestimmte fahrzeugseitige Aufnahme größentechnisch angepasst sind.

Nachfolgend sei die Erfindung anhand von Zeichnungen weiter erläutert. Es zeigen:
- Fig. 1: einen Ausschnitt eines Fahrzeugs mit einem Zustiegsystem in einem bestimmungsgemäßen Einbauzustand in dem Fahrzeug,
- Fig. 2: das Zustiegsystem aus Fig. 1,
- Fig. 3: einen Ausschnitt der Trittkassette des Zustiegsystems aus Fig. 1,
- Fig. 4: einen Ausschnitt der Trittkassette des Zustiegsystems aus Fig. 1 mit daran angeordnetem Adapterrahmen.

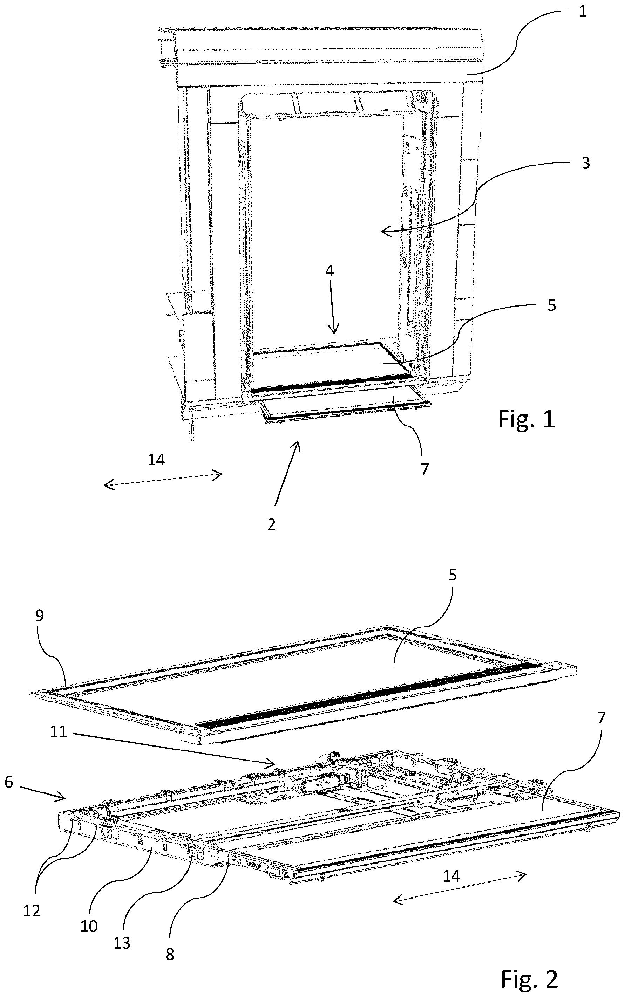

Figur 1 zeigt einen Ausschnitt eines Fahrzeugs 1 mit einem Zustiegsystem 2 in einem bestimmungsgemäßen Einbauzustand. Das Fahrzeug 1 ist in diesem Fall ein Schienenfahrzeug des öffentlichen Personenverkehrs. Das Fahrzeug 1 weist eine Türöffnung 3 auf, wobei das Zustiegsystem 2 unterhalb der Türöffnung 3 in einen Fußboden 4 des Fahrzeugs 1 eingelassen und in einer fahrzeugseitigen Aufnahme angeordnet ist. Das Zustiegsystem 2 ist dabei vollständig in den Fußboden 4 integriert und dient bestimmungsgemäß der Vereinfachung des Ein- und Aussteigens von Fahrgästen. Das Zustiegsystem 2 ist derart in den Fußboden 4 des Fahrzeugs 1 integriert, dass keine Stolperstellen zwischen Zustiegsystem 2 und Fußboden 4 vorhanden sind, und eine Oberseite des Zustiegsystems 2 fluchtend mit dem Fußboden 4 angeordnet ist.

Das Zustiegsystem 2 umfasst einen Deckel 5, welcher einen Teil des Fußbodens 4 bildet, da der Deckel 5 die nach oben offene fahrzeugseitige Aufnahme im Fußboden 4 überspannt. Der Deckel 5 deckt zudem eine Trittkassette 6 nach oben hin ab, so dass die Fahrgäste nicht auf die Trittkassette 6 selbst treten. Die Trittkassette 6 ist in Fig. 1 von dem Deckel 5 verdeckt und daher nicht zu sehen. Die Oberseite des Deckels 5 bildet im Wesentlichen die Oberseite des Zustiegsystems 2 aus, wobei die Oberseite des Deckels 5 fluchtend mit dem Fußboden 4 angeordnet ist.

Unterhalb des Deckels 5 bzw. der Ebene des Fußbodens 4 ist ein Trittplattenmodul 7 mit einer teilweise ausgefahrenen Trittfläche dargestellt. Das Trittplattenmodul 7 kann beim Halt des Fahrzeugs 1 ausfahren, so dass der Ein- und Ausstieg für die Fahrgäste vereinfacht wird. Dabei können die Fahrgäste die Trittfläche des Trittplattenmoduls 7 als Stufe bzw. Tritt nutzen.

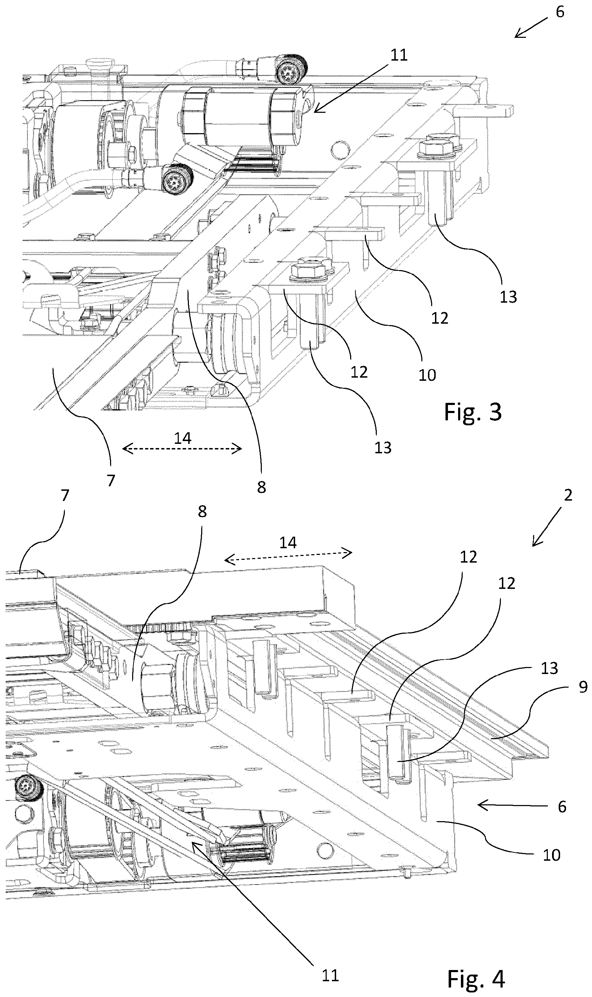

In Figur 2 ist der Aufbau des Zustiegsystems 2 aus Figur 1 genauer dargestellt. Das Zustiegsystem 2 ist aus der Trittkassette 6 und einem Adapterrahmen 9 aufgebaut, wobei diese beiden Baugruppen in Figur 2 beabstandet zueinander dargestellt sind. Die Trittkassette 6 umfasst neben dem Trittplattenmodul 7 ein Antriebsmodul 11 zum automatischen Ein- und Ausfahren des Trittplattenmoduls 7, ein Ausschubmodul 8 ausgebildet als Linearführung zur beweglichen Lagerung des Trittplattenmoduls 7, und einen Kassettenrahmen 10. Der Kassettenrahmen 10 wird mithilfe von Laschen 12 und Schraubverbindungen 13 an dem Adapterrahmen 9 befestigt (siehe dazu insbesondere Figur 4).

Der Deckel 5 ist in einer Deckelaufnahme in dem Adapterrahmen 9 angeordnet und lösbar mit diesem verbunden. Im bestimmungsgemäßen Einbauzustand des Zustiegsystems 2 kann der Deckel 5 aus dem Adapterrahmen 9 herausgenommen werden, so dass der Zugriff auf die Module der Trittkassette 6 darunter ermöglicht wird. Der Adapterrahmen 9 bleibt dabei fest mit der Trittkassette 6 und dem Fahrzeug 1 verbunden.

Figur 3 zeigt einen Ausschnitt der Trittkassette 6 des Zustiegsystems 2 aus Figur 1 ohne Adapterrahmen 9. Die Trittkassette 6 ist von schräg oben dargestellt. Gut zu erkennen sind hier die Laschen 12, welche einstückig mit dem Kassettenrahmen 10 ausgebildet sind. Der Kassettenrahmen 10 ist aus C-Profilen hergestellt, was sehr gut an dem C-förmigen Querschnitt der Profile mit einer waagerechten Oberseite, einer waagerechten Unterseite, und einer die waagerechte Oberseite mit der waagerechten Unterseite verbindende senkrechte Seitenfläche erkennbar ist. Die Laschen 12 sind aus den senkechten Seitenflächen der C-Profile des Kassettenrahmens 10 ausgelasert und nach oben in eine waagerechte Position gebogen. Die Laschen 12 sind in einem 90 ° Winkel zu den senkrechten Seitenflächen der C-Profile angeordnet und fluchten mit den waagerechten Oberseiten der C-Profile.

Die Laschen 12 weisen Öffnungen auf, durch die die Schraubverbindungen 13 gesteckt werden können, so dass der Kassettenrahmen 10 und der Adapterrahmen 9 lösbar miteinander verbunden werden können. Die Schrauben der Schraubverbindungen 13 sind in Figur 3 nur exemplarisch durch die Öffnungen der Laschen 12 gesteckt. Im bestimmungsgemäßen Einbauzustand werden die Schrauben zunächst durch den Adapterrahmen 9 gesteckt und von unten mit Muttern gekontert, sofern keine Gewinde in den Öffnungen der Laschen 12 des Kassettenrahmens 10 vorgesehen sind.

Figur 4 zeigt die Trittkassette 6 mit daran befestigtem Adapterrahmen 9 von schräg unten. Hier ist die Befestigung des Kassettenrahmens 10 über die Laschen 12 an dem Adapterrahmen 9 gut zu erkennen. Die Schrauben der Schraubverbindungen 13 sind durch entsprechende Öffnungen in dem Adapterrahmen 9 gesteckt. Die Muttern zur Sicherung der Schrauben sind nicht dargestellt.

Gut zu erkennen ist das Ausschubmodul 8 mit seinen Linearführungen. Das Trittplattenmodul 7 ist direkt mit dem Antriebsmodul 11 verbunden. Das Antriebsmodul 11 kann mithilfe der Linearführungen das Trittplattenmodul 7 seitlich, das heißt quer zur Fahrtrichtung 14 des Fahrzeugs 1, aus dem Fahrzeug 1 ausfahren.

### Bezugszeichenliste

- 1: Fahrzeug
- 2: Zustiegsystem
- 3: Türöffnung
- 4: Fußboden
- 5: Deckel
- 6: Trittkassette
- 7: Trittplattenmodul
- 8: Ausschubmodul
- 9: Adapterrahmen
- 10: Kassettenrahmen
- 11: Antriebsmodul
- 12: Lasche
- 13: Schraubverbindungen
- 14: Fahrtrichtung

## Patentansprüche

1. Zustiegsystem (2) für Fahrzeuge (1), insbesondere für Fahrzeuge (1) des öffentlichen Personenverkehrs, umfassend eine Trittkassette (6) mit einem Kassettenrahmen (10) und einem relativ zum Kassettenrahmen (10) bewegbaren Trittplattenmodul (7),
**dadurch gekennzeichnet, dass**
• das Zustiegsystem (2) einen Adapterrahmen (9) umfasst, in welchen der Kassettenrahmen (10) einsetzbar ist, wobei
• der Kassettenrahmen (10) eine fahrzeugunabhängige Größe aufweist, und wobei
• der Adapterrahmen (9) eine fahrzeugabhängige Größe zur Anpassung des Zustiegsystems (2) an eine fahrzeugseitige Aufnahme aufweist, so dass der Adapterrahmen (9) in der fahrzeugseitigen Aufnahme einsetzbar ist.

2. Zustiegsystem (2) nach dem vorhergehenden Anspruch,
**dadurch gekennzeichnet, dass**
der Kassettenrahmen (10) und/oder der Adapterrahmen (9) Laschen (12) zur Verbindung des Kassettenrahmens (10) mit dem Adapterrahmen (9) aufweist/aufweisen.

3. Zustiegsystem (2) nach dem vorhergehenden Anspruch,
**dadurch gekennzeichnet, dass**
die Laschen (12) einstückig mit dem Kassettenrahmen (10) ausgebildet sind.

4. Zustiegsystem (2) nach einem der vorhergehenden Ansprüche,
**dadurch gekennzeichnet, dass**
der Kassettenrahmen (10) aus Edelstahl, vorzugsweise aus Edelstahlprofilen, hergestellt ist.

5. Zustiegsystem (2) nach einem der vorhergehenden Ansprüche,
**dadurch gekennzeichnet, dass**
der Adapterrahmen (9) aus Aluminium, vorzugsweise aus Aluminiumprofilen, hergestellt ist.

6. Zustiegsystem (2) nach einem der vorhergehenden Ansprüche,
**dadurch gekennzeichnet, dass**
das Zustiegsystem (2) einen Deckel (5) zur Abdeckung einer Oberseite der Trittkassette (6) umfasst, wobei der Adapterrahmen (9) eine Deckelaufnahme aufweist, in welche der Deckel (5) einsetzbar ist.

7. Zustiegsystem (2) nach dem vorhergehenden Anspruch,
**dadurch gekennzeichnet, dass**
der Deckel (5) in einem bestimmungsgemäßen Einbauzustand des Zustiegsystems (2) im Fahrzeug (1) mit einem Fußboden (4) des Fahrzeugs (1) fluchtend einsetzbar ist und der Deckel (5) dazu eingerichtet ist, wenigstens einen Teil des Fußbodens (4) auszubilden.

8. Zustiegsystem (2) nach einem der beiden vorhergehenden Ansprüche,
**dadurch gekennzeichnet, dass**
der Deckel (5) eine Antirutsch-Oberfläche aufweist.

9. Zustiegsystem (2) nach einem der vorhergehenden Ansprüche,
**dadurch gekennzeichnet, dass**
das Trittplattenmodul (7) eine fahrzeugunabhängige Größe aufweist

10. Zustiegsystem (2) nach einem der vorhergehenden Ansprüche,
**dadurch gekennzeichnet, dass**
die gesamte Trittkassette (6) eine fahrzeugunabhängige Größe aufweist.

11. Zustiegssystem (2) für Fahrzeuge (1), insbesondere für Fahrzeuge (1) des öffentlichen Personenverkehrs, umfassend eine Trittkassette (6) mit einem Kassettenrahmen (10) und einem relativ zum Kassettenrahmen (10) bewegbaren Trittplattenmodul (7),
**dadurch gekennzeichnet, dass**
ein einziger Kassettenrahmen (10) in eine Vielzahl verschiedener Adapterrahmen (9) mit unterschiedlichen Abmessungen einsetzbar ist, wobei die verschiedenen Adapterrahmen (9) derart ausgeführt sind, dass sie jeweils mit anderen Fahrzeugen mit anderen Einbauabmessungen verwendbar sind.

12. Fahrzeug (1), insbesondere ein Fahrzeug (1) des öffentlichen Personenverkehrs, mit einem Zustiegsystem (2) nach einem der vorhergehenden Ansprüche.
